(19) Europäisches Patentamt
European Patent Office
Office européen des brevets

(11) EP 0 783 098 A1

(12) **EUROPÄISCHE PATENTANMELDUNG**

(43) Veröffentlichungstag:
09.07.1997 Patentblatt 1997/28

(51) Int. Cl.6: G01L 19/00

(21) Anmeldenummer: 96120811.3

(22) Anmeldetag: 23.12.1996

(84) Benannte Vertragsstaaten:
AT CH DE DK FR GB LI

(30) Priorität: 05.01.1996 DE 19600291

(71) Anmelder: Waldner Laboreinrichtungen GmbH & Co.
D-88231 Wangen/Allgäu (DE)

(72) Erfinder:
• Kreuzer, Konrad
87493 Lauben (DE)
• Liebsch, Jürgen
88161 Lindenberg (DE)

(74) Vertreter: WILHELMS, KILIAN & PARTNER
Patentanwälte
Eduard-Schmid-Strasse 2
81541 München (DE)

(54) **Vorrichtung zum Messen der Wirkdruckdifferenz eines Gasstromes**

(57) Bei einer Vorrichtung zum Messen der Wirkdruckdifferenz eines Gasstromes über einer Drosselstelle in einem Strömungskanal (1), insbesondere des Abluftstromes einer Abluftanlage mit zwei in Strömungsrichtung vor und hinter der Drosselstelle angeordneten Druckabnahmestellen (3, 4), die mit den Eingängen eines Differenzdrucksensors (2) verbunden sind, ist eine Kurzschlußleitung (6) zwischen einer Stelle vor (7) und einer Stelle hinter (8) der Drosselstelle vorgesehen, auf die die Eingänge des Druckdifferenzsensors (2) umschaltbar sind. In dem auf die Kurzschlußleitung (6) umgeschalteten Zustand mißt der Druckdifferenzsensor (2) das Nullsignal, da an beiden Eingängen der gleiche Druck liegt. Bei Abweichung des tatsächlichen Meßsignals vom Wert Null erfolgt ein entsprechender Nullpunktabgleich. Weiterhin erfolgt eine selbsttätige Überwachung, in der die Eingänge des Druckdifferenzsensors (2) auf die Umgebungsluft (5) und eine Kontrolldruckabnahmestelle (3) umgeschaltet werden und sich die Anordnung über einen Vergleich der gemessenen Werte mit einer bei Inbetriebnahme erstellten Kennlinie selbst überwacht.

Fig. 1B

Fig. 1C

Fig. 1A

EP 0 783 098 A1

## Beschreibung

Die Erfindung betrifft eine Vorrichtung zum Messen der Wirkdruckdifferenz eines Gasstromes über einer Drosselstelle in einem Strömungskanal, insbesondere des Abluftstromes einer Abluftanlage mit zwei in Strömungsrichtung vor und hinter der Drosselstelle angeordneten Druckabnahmestellen, die mit den Eingängen eines Differenzdrucksensors verbunden sind.

Die Messung der Wirkdruckdifferenz eines Gasstromes über einer Drosselstelle und insbesondere die kombinierte Messung von Wirkdruckdifferenzen an hintereinander im Strömungskanal angeordneten Drosselstellen erlaubt die Bestimmung des Gasvolumenstroms, was insbesondere bei Abluftanlagen wie beispielsweise Abzügen zur Bestimmung und Regelung des Luftdurchsatzes von Bedeutung ist.

Um aus den gemessenen Druckdifferenzen die Volumenströme bestimmen zu können und eine aufwendige Kalibrierung auf der Baustelle zu vermeiden, sollten alle Parameter, die neben der Druckdifferenz in die Bestimmung des Volumenstromes eingehen, in Form von Kennlinien angelegt sein, mit deren Hilfe die Meßvorrichtung den jeweiligen Volumenstrom genau bestimmen kann.

Fehleranalysen zur Genauigkeit der ermittelten Volumenströme haben nun gezeigt, daß diese Genauigkeit hauptsächlich von der Genauigkeit der Messung der Wirkdruckdifferenz abhängt, die ihrerseits zunächst durch die Nullpunktdrift und die Ungenauigkeit des benutzten Druckdifferenzsensors aufgrund alterungsbedingter Änderungen seiner Kennlinie bestimmt ist. Druckdifferenzsensoren bestehen in der Regel aus einer Membran, die durch die anliegenden Wirkdrücke ausgelenkt wird, so daß es im Laufe der Zeit zur Ermüdungen kommen kann, die das Meßsignal verfälschen. Das ist ein zeitlich langsam ablaufender Vorgang, der nur durch Langzeituntersuchungen festgestellt werden kann und in der Praxis zu ständig steigenden Ungenauigkeiten führt. Fehler treten auch durch Abweichungen der Drucksensoren aufgrund von Fertigungstoleranzen auf. Eine weitere Fehlerquelle ist in den Verschmutzungen und Ablagerungen zu sehen, die bei verschmutzen Abluftströmen in den Strömungskanälen beispielsweise in den Rohrleitungen, in den Meßschläuchen sowie an der Drosselstelle auftreten. Durch Ablagerungen können insbesondere die in Form von Bohrungen ausgebildeten Druckabnahmestellen, über die der Druck gemessen wird, verschmutzt oder beeinträchtigt werden. Derartige Verschmutzungen führen zu erheblichen Meßungenauigkeiten, bei einem völligen Verschluß der Bohrungen der Druckabnahmestellen kann es zu völligen falschen Meßergebnissen kommen.

Die oben beschriebenen Fehlerquellen bestehen auch bei Sensoren, deren Arbeit auf einer thermischen Aufheizung beruht, da es durch die thermische Aufheizung gleichfalls zu Alterungserscheinungen kommen kann, die das Sensorausgangssignal ändern. Auch bei thermischen Sensoren können die Oberflächen verschmutzen oder korrodieren, was gleichfalls zu den entsprechenden Fehlern führt.

Die der Erfindung zugrunde liegende Aufgabe besteht daher darin, die Vorrichtung der eingangs genannten Art so auszubilden, daß eine Fehlererkennung möglich ist.

Diese Aufgabe wird gemäß der Erfindung durch die Ausbildung gelöst, die im Kennzeichen des Patentanspruchs 1 angegeben ist.

Wenn bei der erfindungsgemäßen Vorrichtung insbesondere in regelmäßigen Abständen die Eingänge des Druckdifferenzsensors umgeschaltet werden, kann eine Eigenüberwachung erfolgen, in der sich die Vorrichtung anhand einer selbsterstellten Kontrollkennlinie überwacht und auftretende Fehler meldet.

Besonders bevorzugte Weiterbildungen und Ausgestaltungen der Erfindung sind Gegenstand der Patentansprüche 2 bis 4.

Im Folgenden werden anhand der zugehörigen Zeichnung besonders bevorzugte Ausführungsbeispiele der Erfindung näher beschrieben. Es zeigen

Fig. 1A bis 1C schematisch ein Ausführungsbeispiel der Vorrichtung zum Messen der Wirkdruckdifferenz in drei verschiedenen Schaltstellungen,
Fig. 2 schematisch eine Anordnung zum Messen des Luftvolumenstromes in einem Strömungskanal,
Fig. 3 ein weiteres Ausführungsbeispiel einer Anordnung zum Messen des Luftvolumenstromes in einem Strömungskanal,
Fig. 4 ein weiteres Ausführungsbeispiel der Vorrichtung zum Messen der Wirkdruckdifferenz in drei verschiedenen Schaltstellungen,
Fig. 5 noch ein Ausführungsbeispiel der Vorrichtung zum Messen der Wirkdruckdifferenz in drei verschiedenen Schaltstellungen und
Fig. 6 in einem Diagramm den Verlauf des Ausgangssignals am Druckdifferenzsensor gegenüber der Zeit in den verschiedenen Schaltstellungen der Vorrichtung zum Messen der Wirkdruckdifferenz.

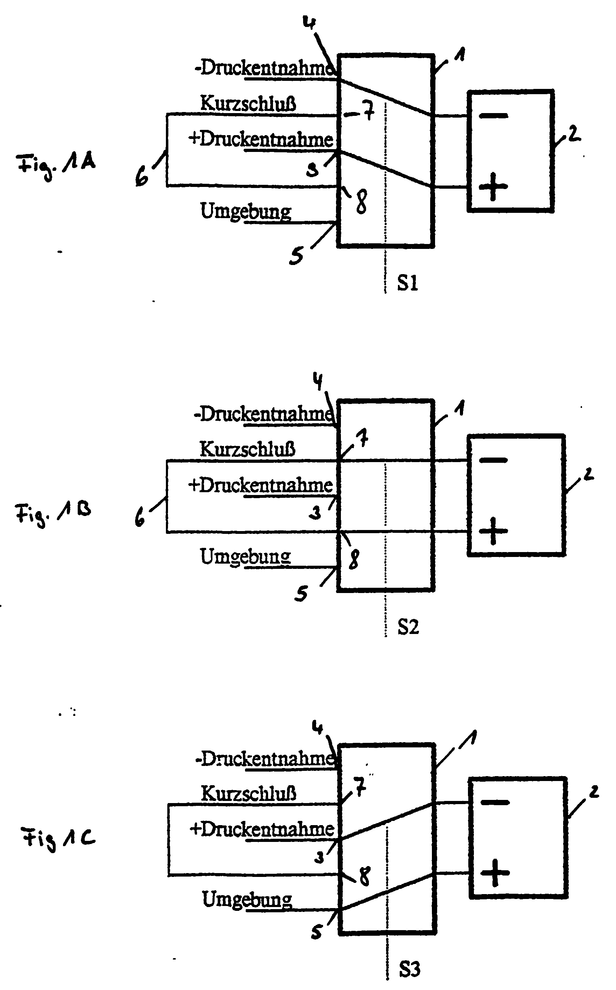

In den Fig. 1A bis 1C ist schematisch eine Vorrichtung zum Messen der Wirkdruckdifferenz eines Gasstromes in einem Strömungskanal 1 und zwar über einer Drosselstelle dargestellt, die zwischen den Druckabnahmestellen 3 und 4 im Strömungskanal 1 vorgesehen jedoch nicht näher in Fig. 1A bis 1C dargestellt ist. Es kann sich dabei insbesondere um eine Vorrichtung zum Messen der Wirkdruckdifferenz eines Abluftstromes einer Abluftanlage beispielsweise eines Abzuges handeln. Die Druckabnahmestellen 3 und 4, die in Form von Bohrungen vorliegen, sind mit den Eingängen eines Druckdifferenzsensors 2 verbunden.

In Fig. 1A ist mit der Schaltstellung S1 der normale Betriebszustand dargestellt. In diesem Betriebszustand ist der Differenzdrucksensor 2 mit den Druckabnahmestellen 3 und 4 d.h. mit der negativen Druckabnahmestelle 4 und der positiven Druckabnahmestelle 3 verbunden, so daß über die Messung der Druckdifferenz der anliegende Volumenstrom bestimmt werden kann.

Fig. 1B zeigt den Schaltzustand S2 für den Nullpunktabgleich. In diesem Schaltzustand S2 sind die Eingänge des Druckdifferenzsensors 2 mit einer Kurzschlußleitung 6 verbunden, die Druckentnahmestellen 7 und 8 vor und hinter der Drosselstelle jeweils kurzschließt. In der Schaltstellung S2 liegt somit an beiden Eingängen des Druckdifferenzsenors 2 der gleiche Druck, so daß theoretisch der Nullpunkt gemessen werden sollte. Ergibt sich durch Alterung des Sensors, Verschmutzung oder andere Fehlerfaktoren ein von Null abweichender Meßwert beim Sensorkurzschluß, so kann daraus ein Fehlerwert bestimmt werden. Wenn die Vorrichtng Bestandteil eines Reglers ist, kann dieser einen internen Offset durchführen und den beim Sensorkurzschluß von Null abweichenden Meßwert vom eigentlichen Meßwert abziehen, so daß eine entsprechende Software einen Nullpunktabgleich durchführen kann. Es hat sich gezeigt, daß durch einen derartigen selbsttätigen Nullpunktabgleich die Genauigkeit der Bestimmung insbesondere von niedrigen Volumenströmen stark erhöht werden kann.

Fig. 1C zeigt einen weiteren Schaltzustand S3, bei dem die Eingänge des Druckdifferenzsensors 2 mit der positiven Druckabnahmestelle 3 und einer zur Umgebung führenden Leitung 5 verbunden sind. In dieser Schaltstellung ist der Sensor 2 umgepolt, sein negativer Eingang liegt an der positiven Druckabnahmestelle und sein positiver Eingang liegt auf dem Umgebungsdruck. Der Sensor 2 kann in dieser Schaltstellung S3 den statischen Druckverlust der Meßstelle messen.

Fig. 2 zeigt schematisch ein Ausführungsbeispiel einer Anordnung zum Bestimmen des Luftvolumenstroms in einem Strömungskanal 1. Eine Drosselstelle 10 in Form einer Blende ist im Strömungskanal 1 angeordnet und an den Eingängen eines Druckdifferenzsensors 2 liegen die Wirkdrücke von Druckabnahmestellen 3 und 4 vor und hinter der Drosselstelle 10. Die Druckabnahmestelle 4 besteht aus zwei Teilen nämlich einer Stelle vor und einer Stelle hinter einer weiteren Drosselstelle in Form einer Drosselklappe 9. Die Blende 10 ist beispielsweise eine Differenzdruckmeßblende und die Druckabnahmestellen 3, 4 bestehen aus Bohrungen, die mit Ringkanälen miteinander verbunden sind, die zum Druckdifferenzsensor 2 führen. Je nach Stellung der Drosselklappe 9 ergibt sich ein Volumenstrom, der zwischen den beiden Druckabnahmestellen 4 über der Drosselklappe 9 fließt, wodurch insgesamt der Differenzdruck am Differenzdrucksensor 2 abgesenkt wird. Durch diese Ausbildung kann am Differenzdrucksensor nahezu über den gesamten Volumenstrombereich ein gleichbleibender Differenzdruck gemessen werden, so daß sich diese Anordnung zur Bestimmung des Volumenstromes über einen weiten Volumenstrombereich eignet. Hierzu muß lediglich neben der Druckdifferenz $\Delta P$ auch der Stellwinkel $\alpha$ der Drosselklappe 9 bestimmt werden.

Der Volumenstrom wird nach der folgenden Gleichung bestimmt:

$$V = C_{\alpha,\Delta p} \cdot \sqrt{\Delta_P}$$

in der der Faktor $C_{\alpha,\Delta p}$ aus einem Kennlinienfeld aus $\Delta P$ und $\alpha$ ermittelt wird. Über ein derartiges Kennlinienfeld kann dann ein Volumenstrom mit einer maximalen Abweichung von +/- 5% in Abhängigkeit vom Differenzdruck $\Delta P$ und vom Winkel $\alpha$ bestimmt werden.

Die obige Meßvorrichtung kann ein Bestandteil einer Regelanordnung zum Regeln des Volumenstromes im Strömungskanal 1 sein, die zu Betriebsbeginn mit einem neuen Drucksensor und unverschmutzen Rohrleitungen arbeitet. Diese Regelanordnung befindet sich beispielsweise auf einem Luftverbraucher, insbesondere einem Abzug. Der statische Druckverlust eines derartigen Verbrauchers ist nicht bekannt und zum Betrieb auch nicht notwendig, da bei Inbetriebnahme der Druckdifferenzsensor 2 neu und nicht verschmutzt ist.

Durch Umschalten auf die Schaltposition S2 in Fig. 1B erfolgt bei Inbetriebnahme zunächst ein Nullpunktabgleich. Danach wird der Luftverbraucher, beispielsweise der Abzug eingeschaltet und wird die Drosselklappe 9 geschlossen, so daß keine Luft strömt. Anschließend wird die Drosselklappe 9 um 5% auf einen Winkel von 5° geöffnet. Mit Hilfe der Druckdifferenz $\Delta P$ und des Winkels $\alpha$ kann der Blendenfaktor C für $\alpha$ und $\Delta P$ bestimmt werden, so daß der Volumenstrom nach der oben angegebenen Gleichung ermittelt werden kann. Anschließend wird die Stellung der Drosselklappe 9 konstant gehalten. Der Druckdifferenzsensor 2 wird auf die Schaltstellung S3 umgeschaltet, in der sein negativer Eingang mit einer Kontrollstelle nämlich der statischen Druckabnahmestelle 3 verbunden ist, während sein positiver Eingang auf Umgebungsdruck liegt. Der Volumenstrom hat sich dabei nicht geändert. Der Volumenstrom an der Kontrollstelle ist dann identisch mit dem Volumenstrom an der Meßstelle. Wenn dann eine erste Wirkdruckdifferenz $\Delta P_1$ an der Druckabnahmestelle 3 gemessen wird, kann ein erstes Wertepaar in eine Tabelle geschrieben werden. Durch Öffnen der Drosselklappe 9 schrittweise bis 90° kann eine Tabelle für die Kontrollmeßstelle bestimmt werden. Die Regelanordnung schafft sich in dieser Weise in Abhängigkeit vom zugehörigen Verbraucher eine eigene Kontrollkennlinie.

Messungen haben gezeigt, daß Meßwerte an der Kontrollmeßstelle und an der normalen Meßstelle maximal um 10% voneinander abweichen dürfen, Abweichungen von mehr als 10% sind als Fehler zu werten.

Mit der obigen Anordnung ist eine einfache Systemüberwachung möglich. Im Betrieb wird an der Druckabnahmestelle 3 und 4 der Volumenstrom gemessen. In regelmäßigen Abständen wird unter Beibehaltung der Stellung der Drosselklappe 9 von der Schaltposition S1 auf die Schaltposition S3 umgeschaltet und die neue Wirkdruckdifferenz $\Delta P$ an der Kontrollstelle gemessen. Anhand der für den zugehörigen Verbraucher bei Inbetriebnahme spezifisch ermittelten Kennlinie der Kontrollstelle kann der Volumenstrom der Kontrollstelle ermittelt werden. Gibt es eine Meßdifferenz von mehr als 10% zwischen dem Volumenstrom an der Kontrollstelle und an der Meßstelle, so ist die Messung des Systems als fehlerhaft anzusehen. Das System kann diesen Fehler erkennen und ein Alarmsignal auslösen. Die am Verbraucher arbeitende Person kann dann eine Prüfung des Systems beispielsweis eine Reinigung der Meßvorrichtung vornehmen.

Da selbsttätig ein Nullabgleich erfolgt, können Fehler, die durch Verschmutzungen oder Beschädigungen des Druckdifferenzsensors entstehen, durch die Vorrichtung selbst erkannt und kompensiert werden.

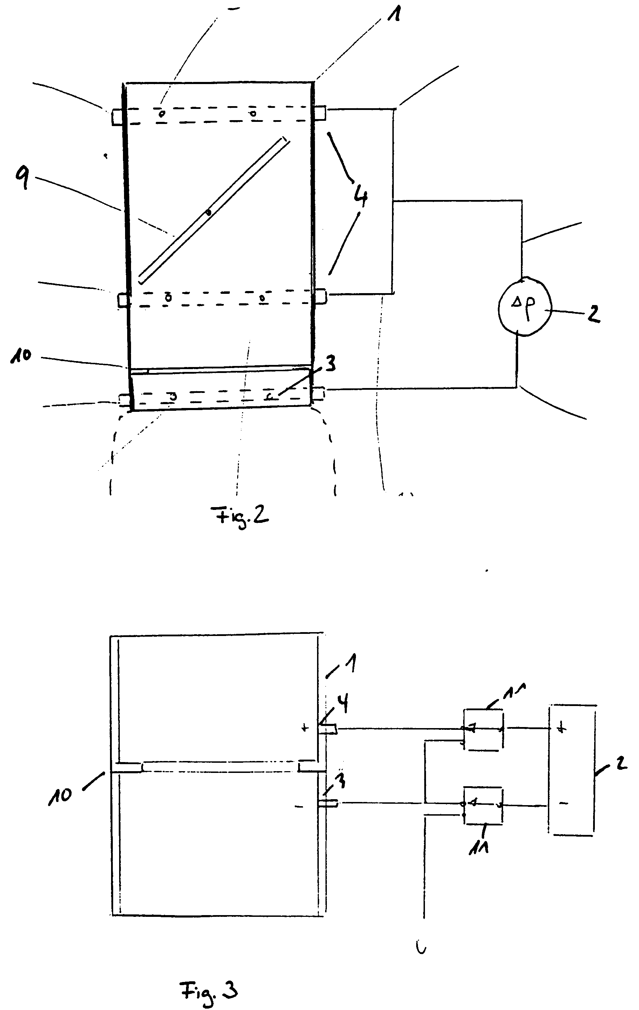

Fig. 3 zeigt ein weiteres Ausführungsbeispiel der Vorrichtung zum Messen der Wirkdruckdifferenz in einem Strömungskanal 1, in dem nur eine einzige Drosselstelle in Form einer Meßblende 10 vorgesehen ist. Statt der Differenzdruckmeßblende 10 kann auch eine Venturidüse vorgesehen sein. Im Normalbetrieb ist der Differenzdrucksensor 2 mit den beiden Druckabnahmestellen 3, 4 vor und hinter der Meßblende 10 verbunden. Mit Hilfe von Magnetventilen 11 kann ein Nullabgleich erfolgen, indem die Eingänge des Druckdifferenzsensors 2 entsprechend auf die Schaltstellung S2 umgeschaltet werden.

Bei dem in Fig. 1 dargestellten Ausführungsbeispiel erfolgt die Überwachung dadurch, daß die Schaltstellung des Druckdifferenzsensors 2 vom Normalbetrieb in der Schaltstellung S1 auf den Abgleichbetrieb in der Schaltstellung S2 umgeschaltet wird, in der an beiden Eingängen des Druckdifferenzsensors 2 der gleiche Druck liegt. In der Schaltstellung S3, d.h. im Systemüberwachungsbetrieb wird eine Kontrollstelle gegenüber dem Umgebungsdruck gemessen.

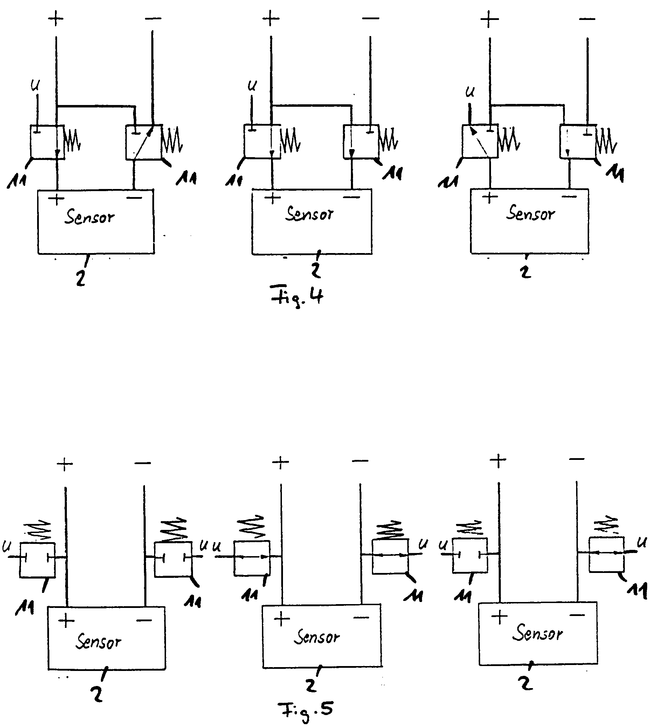

Wie es in Fig. 1 dargestellt ist, erfolgt das Umschalten über ein 7/3-Wegeventil. 7/3-Wegeventile sind jedoch aufwendig. Fig. 4 zeigt ein Ausführungsbeispiel, das mit 2/3-Wegeventilen 11 arbeitet. Das linke 3-Wegeventil 11 ist an den positiven Eingang des Druckdifferenzsensors sowie an die Umgebungsluftleitung und an die positive Druckabnahmestelle angeschlossen. Das rechte 3-Wegeventil liegt am negativen Eingang des Druckdifferenzsensors 2 und an der negativen Druckabnahmestelle. In der Ruhestellung sind die Magnetventile 11 so eingestellt, daß die positive und die negative Druckabnahmestelle mit den Eingängen des Druckdifferenzsensor 2 verbunden sind. Wenn in der in Fig. 4 in der Mitte dargestellten Schaltstellung das rechte Magnetventil 11 umgeschaltet ist, dann liegt an beiden Sensoreingängen dasselbe Drucksignal, so daß der Sensor 2 ein Nullsignal liefern sollte. In dieser Schaltstellung erfolgt der Nullpunktabgleich. Wird anschließend auch das andere Magnetventil 11 umgeschaltet, so sind die Eingangssignale am Druckdifferenzsensor 2 umgekehrt. Das positive Drucksignal liegt am negativen Eingang und der positive Eingang des Druckdifferenzsensors liegt auf Umgebungsluftdruck.

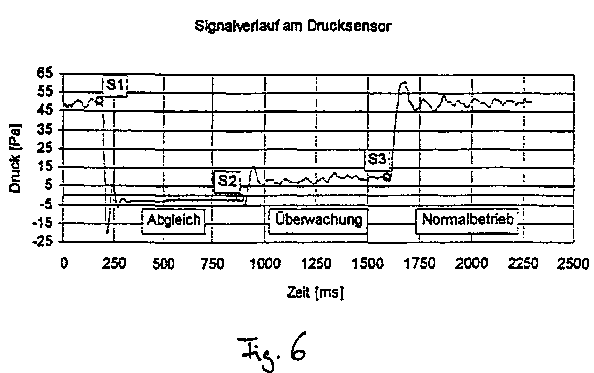

Fig. 5 zeigt ein entsprechendes Ausführungsbeispiel, bei dem mit Hilfe von 2/2-Magnetventilen 11 eine Umschaltung erfolgt. In der linken normalen Schaltstellung liegt die positive Druckabnahmestelle am positiven Eingang des Druckdifferenzsensors 2 und liegt die negative Druckabnahmestelle am negativen Eingang des Druckdifferenzsensors 2. Das ist der Normalfall, in dem eine Messung erfolgt. Für einen Nullabgleich werden beide Magnetventile 11 geöffnet. Dann liegt an beiden Eingängen des Druckdifferenzsensors 2 der gleiche Druck, so daß ein Nullabgleich erfolgen kann. Diese Schaltstellung ist in Fig. 5 in der Mitte dargestellt. In Falle einer Systemüberwachung wird das linke Magnetventil wieder geschlossen, wie es in Fig. 5 in der rechten Schaltstellung dargestellt ist. Dann liegt am negativen Eingang des Druckdifferenzsensors 2 ein positiver Druck während das rechte Magnetventil auf Durchgang geschaltet ist, so daß sich dort der geringere Umgebungsdruck einstellt. Die Anordnung ist auf die Systemüberwachung geschaltet.

Fig. 6 zeigt den Verlauf des Ausgangssignals am Drucksensor 2 gegenüber der Zeit in den verschiedenen Betriebsarten des Abgleichs, der Überwachung und im Normalbetrieb. Der Druckdifferenzsensor 2 ist zunächst bis zu Punkt S1 auf den Normalbetrieb geschaltet. Es liegt beispielsweise ein Druck von 45 Pa an. Anschließend wird auf den Abgleichbetrieb umgeschaltet, so daß sich nach einer kurzen Einschwingphase der Druck auf -2 Pa verringert. Es erfolgt dann ein selbständiger Nullpunktabgleich, indem der Wert von -2 Pa auf Null gesetzt wird. Am Punkt S2 wird auf die Systemüberwachung umgestellt, so daß der Druck auf +7 Pa ansteigt. Damit kann der alte Meßpunkt an der Stelle S1 überprüft werden. Nach einer gewissen Zeit erfolgt wieder eine Umschaltung auf den Normalbetrieb. In dieser Weise ist eine komplette Systemüberwachung mit Nullpunktabgleich durchgeführt worden. Ist ein derartiger Abgleich nicht möglich oder unterscheiden sich die Werte im Überwachungsbetrieb und im Normalbetrieb mehr als +/- 10% vom vorher aufgenommenen Vergleichswert, so kann ein Servicealarm ausgegeben werden.

**Patentansprüche**

1. Vorrichtung zum Messen der Wirkdruckdifferenz eines Gasstromes über einer Drosselstelle in einem Strömungskanal, insbesondere des Abluftstromes einer Abluftanlage mit zwei in Strömungsrichtung vor und hinter der Drosselstelle angeordneten Druckabnahmestellen, die mit den Eingängen eines Differenzdrucksensors verbunden sind, dadurch gekennzeichnet, daß die Eingänge des Druckdifferenzsensors (2) auf die Umgebungsluft (5) und eine Kontrolldruckabnahmestelle umschaltbar sind.

2. Vorrichtung nach Anspruch 1, dadurch gekennzeichnet, daß die Umschaltung der Eingänge des Differenzdrucksensors (2) über 7/3-Wegeventile erfolgt.

3. Vorrichtung nach Anspruch 1, dadurch gekennzeichnet, daß die Umschaltung der Eingänge des Druckdifferenzsensors (2) über 2/3-Wegeventile erfolgt.

4. Vorrichtung nach Anspruch 1, dadurch gekennzeichnet, daß die Umschaltung der Eingänge des Druckdifferenzsensors (2) über 2/2-Wegeventile erfolgt.

Fig. 1A

-Druckentnahme
Kurzschluß
+Druckentnahme
Umgebung

S1

Fig. 1B

-Druckentnahme
Kurzschluß
+Druckentnahme
Umgebung

S2

Fig 1C

-Druckentnahme
Kurzschluß
+Druckentnahme
Umgebung

S3

Fig. 2

Fig. 3

Fig. 4

Fig. 5

**Signalverlauf am Drucksensor**

Fig. 6

Europäisches
Patentamt

**EUROPÄISCHER RECHERCHENBERICHT**

Nummer der Anmeldung

EP 96 12 0811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 453 417 A (MOYERS) 12.Juni 1984<br>* Spalte 3, Zeile 11 - Spalte 5, Zeile 6; Abbildungen 1,2 *<br>--- | 1-4 | G01L19/00 |
| X | US 4 879 912 A (SUCKOW) 14.November 1989<br>* Spalte 3, Zeile 50 - Spalte 6, Zeile 22; Abbildungen 1,2 *<br>----- | 1-4 | |

**RECHERCHIERTE SACHGEBIETE (Int.Cl.6)**

G01L
G01F

Der vorliegende Recherchenbericht wurde für alle Patentansprüche erstellt

| Recherchenort | Abschlußdatum der Recherche | Prüfer |
|---|---|---|
| MÜNCHEN | 3.März 1997 | Gerken, S |